(19) Europäisches Patentamt
European Patent Office
Office européen des brevets

(11) Veröffentlichungsnummer: **0 001 868**
**B1**

(12) # EUROPÄISCHE PATENTSCHRIFT

(45) Veröffentlichungstag der Patentschrift: **15.12.82**

(21) Anmeldenummer: **78200286.9**

(22) Anmeldetag: **02.11.78**

(51) Int. Cl.³: **D 21 H 3/40**, C 08 L 57/02 //(C08L57/02, 35/00)

(54) **Papierleimungsmittel.**

(30) Priorität: **09.11.77 DE 2750070**

(43) Veröffentlichungstag der Anmeldung: **16.05.79 Patentblatt 79/10**

(45) Bekanntmachung des Hinweises auf die Patenterteilung: **15.12.82 Patentblatt 82/50**

(84) Benannte Vertragsstaaten: **BE CH DE FR GB LU NL SE**

(56) Entgegenhaltungen:
BE - A - 659 768
FR - A - 2 101 551
FR - A - 2 147 279
FR - A - 2 206 406
US - A - 3 279 975

(73) Patentinhaber: **CHEMISCHE WERKE HÜLS AG**
**Postfach 1320**
**D-4370 Marl 1 (DE)**

(72) Erfinder: **Schülde, Felix, Dr.**
**Am Gecksbach 20**
**D-4273 Wulfen-Barkenberg (DE)**
Erfinder: **Kulisch, Volker**
**Tunnelstrasse 55**
**D-4390 Gladbeck (DE)**

(74) Vertreter: **Steil, Hanna, Dipl.-Chem. et al,**
**RSP PATENTE-PB 40 Holsterhauser Strasse 160**
**Postfach 2840**
**D-4690 Herne 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 868 B1

# Papierleimungsmittel

Die Erfindung betrifft Papierleimungsmittel auf Basis säuregruppenhaltiger Polymerer aus ungesättigten Kohlenwasserstoffen olefinischen Charakters (sog. sauren Kohlenwasserstoffharzen), im Gemisch mit Copolymerisaten aus ungesättigten Polycarbonsäureeinheiten mit $\alpha$-Olefinen oder Vinylmonomeren, ggf. im Gemish mit anderen Harzen, und die Leimung von Papier mit diesen Leimungsmitteln.

Aus der DT—A—24 02 926 ist bekannt, daß Harzleime auf der Basis von Kolophoniumharz verwendet werden können, wenn man Kolophoniumharz modifiziert, indem man es mit einer $\alpha,\beta$-ungesättigten Carbonsäure oder deren Anhydrid umsetzt. Dieses "verstärkte" Kolophonium kann durch Zusatz neutraler Kohlenwasserstoffharze gestreckt werden. Das Harzgemisch wird zusammen mit einer flüchtigen Base in Form von wässerigen Dispersionen, welche den Zusatz eines Schutzkolloids, wie Casein, erfordern, für eine Verwendung als Papierleim empfohlen.

Weiterhin ist bekannt, daß zur Oberflächenleimung von Papier Lösungen oder Dispersionen von Copolymerisaten aus Carbonsäuren bzw. deren Anhydriden mit Olefinen und deren Umsetzungsprodukte mit basischen Verbindungen geeignet sind.

Mit diesen Copolymerisaten kann im geleimten Papier zwar ein hoher Leimungsgrad erzielt werden, die Wasserfestigkeiten des so geleimten Papiers bleiben aber gering.

Diese, dem Stand der Technik entsprechenden "synthetischen" Leimungsmittel führen außerdem bei der Leimung von in der Masse vorgeleimten Papier, wie es vornehmlich in der Praxis Verwendung findet, zu schlechteren Leimungsergebnissen als bei der Oberflächenleimung von ungeleimten Papier, das aus technologischen Gründen jedoch meistens nicht zur Verfügung steht.

Die vorliegende Erfindung betrifft für die Papieroberflächenleimung geeignete Leimungsmittel auf Basis saurer Kohlenwasserstoffharze, die ggf. mit anderen, z.B. Naturharzen, abgemischt sein können und welche insbesondere im Gemisch mit Umsetzungsprodukten von Copolymerisaten aus $\alpha,\beta$-ungesättigten Polycarbonsäureanhydridmonomeren und Vinylmonomeren mit geeigneten basischen Komponenten wie z.B. Alkalihydroxiden, Alkalikarbonaten, $NH_3$, Aminen oder Diaminen eingesetzt, sowohl nicht geleimtem als auch in der Masse vorgeleimtem Papier ausgezeichnete Leimungswerte, insbesondere auch gute Wasserresistenz verleihen.

Dieses Ergebnis ist aus verschiedenen Gründen überraschend und nicht vorhersehbar.

Es ist zwar aus FR—A—2 206 406 bekannt, Copolymerisate auf Basis Maleinsäureanhydrid als Leimungsmittel allein oder in Kombination mit Petrolharzen — wobei es sich um neutrale Harze handelt — einzusetzen.

Schließlich ist es gemäß US—A—3 279 975 auch für sich bekannt säuregruppenhaltige Petrolharze einzusetzten. Da aber weder die in FR—A—2 206 406 gezeigten Verbindungen (Beispiel 2, Leimungsmittel V) noch ihre Kombination mit Neutralharzen (Beispiel 1, Leimungsmittel III) noch saure Harze allein (etwa Beispiel 3, Leimungsmittel VIII) besonders gute Oberflächenleimung zeigen, war es nicht zu erwarten, daß die vorliegende Erfindung zu Leimergebnissen mit besonders hoher Leimfestigkeit und überraschend geringer Wasserempfindlichkeit der Papiere, also zu einer hohen Wasserresistenz, führen würde. Dieser synergistische Effekt war nicht voraussehbar und nicht zu erwarten.

Gegenstand der Erfindung sind somit Papierleimungsmittel auf der Basis von:

A. säuregruppenhaltigen aliphatischen Kohlenwasserstoffharzen aus polymerisierten $C_4$-Schnitten und/oder $C_5$-Schnitten und gegebenenfalls $C_4$-Raffinaten, die mit ungesättigten Polycarbonsäureeinheiten modifiziert sind, mit Säurezahlen von 10—130, vorzugsweise 30—60, die gegebenenfalls noch andere synthetische oder natürliche Harze enthalten können und

B. Umsetzungsprodukten von Copolymerisaten aus einerseits $\alpha,\beta$-ungesättigten Polycarbonsäureeinheiten und andererseits $\alpha$-Olefinen mit bis zu 5 C-Atomen oder Vinylmonomeren mit basischen Komponenten — wobei A als wässrige Dispersion ihrer Alkalisalze mit einem Festkörpergehalt von 10—70 Gew.-% vorliegt, die modifizierten Kohlenwasserstoffharze darin einen Feststoffanteil von 10—60 Gew.-%, vorzugsweise 30—45 Gew.-% bilden und gegebenenfalls synthetische oder natürliche Harze bis zu 15 Gew.-%, vorzugswiese 3—5 Gew.-% anwesend sind — und B eine wässrige Lösung mit einem Festkörpergehalt von 5—50 Gew.-%, vorzugsweise 15—30 Gew.-% darstellt- und das Verhältnis von A : B 99 : 1 bis 1 : 99, bevorzugt 97 : 3 bis 70 : 30, bezogen auf den Festkörpergehalt beträgt.

Als Komponente A geeignete Kohlenwasserstoffharze im Sinne der vorliegenden Erfindung sind solche, die durch die Polymerisation (in Gegenwart von Friedel-Crafts-Katalysatoren) eines bei der thermischen Krackung eines Kohlenwasserstoffstromes abdestillierten $C_4$- und/ober $C_5$-Schittes und ggf. unter Zugabe eines $C_4$-Raffinates, das aus Isobuten, n-Buten-1, cis-trans-n-Buten-2, n-Butan, Isobutan und ggf. Spuren von Butadien besteht und durch Isolierung von Butadien aus einem Kohlenwasserstoff-$C_4$-Schnitt erhalten worden ist, zugänglich sind und welche nach der Polymerisation durch Reaktion (Anlagerung) mit ungesättigten Dicarbonsäurreeinheiten, wie z.B. Maleinsäureanhydrid, derart modifiziert sind, daß die folgende Kriterien aufweisen:

| | auf $C_4$-Schnitt basierende Harze | auf $C_5$-Schnitt basierende Harze |
|---|---|---|
| Säurezahl | 10—100 | 10—130 |
| Erweichungspunkt (Ring u. Kugel) | 70—130 | 90—140 |

Die ggf. in Komponente A mitverwendeten synthetischen Harze können z.B. sein: neutrale aliphatische Kohlenwasserstoff-Naturharze oder Inden-Cumaronharze; als Naturharze können z.B. Kolophonium- oder Wurzelharze verwendet werden.

Als Komponente B im Sinne der Erfindung können Copolymerisate aus $\alpha$-$\beta$-ungesättigten Dicarbonsäureeinheiten wie z.B. Maleinsäureanhydrid, Fumarsäure, mit $\alpha$-Olefinen mit bis zu 5 C-Atomen bzw. Vinylmonomeren wie Styrol und dessen Homologe, Vinylester, Vinylpyridin, Vinylamide, Vinylhalogenide, Vinylalkohol, Allylalkohol, Vinylalkyläther, (Meth-)-Acrylsäure, -ester, -amide, -nitril, Inden, Cyclopentadien, Dicyclopentadien eingesetzt werden, wobei die Dicarbonsäureeinheiten im Verhältnis 1:5 bis 5:1 mit den anderen Monomeren copolymerisiert sein können und die Copolymerisate in Form ihrer Umsetzungsprodukte in wässrigem oder wasserfreiem Medium mit basischen Komponenten wie z.B. Alkalihydroxiden, Alkalikarbonaten, $NH_3$, primären oder sekundären aliphatischen Aminen oder Diaminen verwendet werden. Insbesondere ist die Komponente B ein Halbamid eines Styrol-Maleinsäure Copolymerisats.

Die Bereitung der Leimungsmittel gemäß der Erfindung erfolgt in einfacher Weise: Zunächst werden das saure Kohlenwasserstoffharz und das ggf. mitverwendete Naturharz bei ca. 130°C aufgeschmolzen und in der Schmelze gemischt. Nach dem Erkalten wird das erstarrte Harzgemisch zerkleinert. In einem geeigneten Gefäß werden Wasser und Alkali vorgelegt, das zerkleinerte Harzgemisch zugegeben und das Ganze unter Rühren erhitzt. Die Dispergiertemperatur liegt bei 90 bis 100°C. Die Zugabe von üblichen Dispergiermitteln ist nicht erforderlich. Nach Erhalt einer homogenen Dispersion wird bis zum Erkalten weitergerührt. Anschließend wird die wässrige Lösung des Copolymerisat-Umsetzungsproduktes zugegeben und gleichmäßig verrührt. Das so erhaltene Leimungsmittel besitzt eine sehr gute Feinheit und Lagerstabilität, ohne daß die Zugabe eines Schutzcolloids erforderlich ist.

Die erfindungsgemäßen Papierleimungsmittel können mit für die Papierleimung gebräuchlichen anionischen Stärken kombiniert und auf den in der Papierherstellung üblichen Leimpressen verarbeitet werden.

Beispiel 1

*Leimungsmittel I*

Ein in Gegenwart von Friedel-Crafts-Katalysatoren polymerisiertes Kohlenwasserstoffharz, bestehend zu 75% aus einem Kohlenwasserstoff-$C_4$-Schnitt und zu 25% aus einem butadienfreien $C_4$-Raffinat, wurde durch Anlagern von Maleinsäureanhydrid derart modifiziert, daß es folgende Eigenschaften besaß:

| | | |
|---|---|---|
| Säurezahl | : | 57 mgKOH/g |
| Verseifungszahl | : | 90 mgKOH/g |
| Erweichungspunkt | : | 72°C (Ring u. Kugel) |
| Gardner-Farbzahl | : | 13 |

42,6 Gew.Tl. dieses Kohlenwasserstoffharzes wurden mit 6,4 Gew.Tl. 20 %iger Natronlauge und 51,0 Gew.Tl. Wasser dispergiert. Zu dieser Dispersion wurden 4,7 Gew.Tl. einer 25 %igen wässrigen Lösung eines Maleinsäureanhydrid-Copolymerisates der Formel

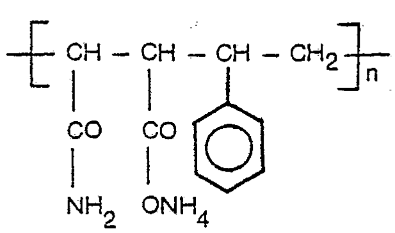

gegeben und das so erhaltene Leimungsmittel mit Wasser auf einen Festkörpergehalt von 20 Gew.% verdünnt.

*Leimungsmittel II*

37,7 Gew.Tl. des in Leimungsmittel I verwendeten Kohlenwasserstoffharzes wurden mit 4,9 Gew.Tl. eines portugiesischen Balsamharzes vom Typ WW mit einer Säurezahl von 165—171 und einem Ring- und Kugel-Erweichungspunkt von 71—75°C aufgeschmolzen, nach dem Erstarren zerkleinert und dieses Harzgemisch analog I zu einem 20 %igen Leimungsmittel formuliert.

*Leimungsmittel III* (Vergleich)

Ein ohne Anlagern von Maleinsäureanhydrid, sonst aber analog dem in Leimungsmittel I verwendeten Kohlenwasserstoffharz hergestelltes Harz mit folgenden Eigenschaften:

| | |
|---|---|
| Säurezahl | : <1 mgKOH/g |
| Verseifungszahl | : <1 mgKOH/g |
| Erweichungspunkt | : 94°C (Ring und Kugel) |
| Gardner-Farbzahl | : 4 |

wurde entsprechend dem Leimungsmittel II dispergiert und auf einen Festkörpergehalt von 20% eingestellt.

Die Leimungsmittel I bis III wurden mit einer anionen-aktiven Maisstärke, die im Handel unter der Bezeichnung "Amisol 5591" erhältlich ist, zu 10 %igen Leimflotten kombiniert. Das Festkörperverhältnis von Leimungsmittel zu Stärke betrug 1,5 : 8,5. Diese Flotten wurden auf einer Laborleimpresse auf ein ungeleimtes 80 g-Papier appliziert. Die Trocknung des Papiers in der Leimpresse erfolgte bei 140—160°C in ca. 5 sec. Die erzielten Leimungswerte enthält Tabelle 1.

TABELLE 1

| Leimungsmittel | I | II | III | ohne |
|---|---|---|---|---|
| Wasseraufnahme (DIN 53 132) sec | 120 | 120 | * | <1 |
| g/m² | 23 | 22 | * | 89 |
| Leimungsgrad (DIN 53 145) sec | 290 | 415 | * | 0 |
| Saughöhe (DIN 53 106) mm | 3 | 2 | * | 44 |
| Glätte (Beck) (DIN 53 107) sec | 8 | 7 | * | 19 |

*mit der Stärke unverträglich, Ausfällungen

Es ist ersichtlich, daß die im Sinne dieser Erfindung hegestellten Leimungsmittel I und II dem Papier eine ausgezeichnete Wasserfestigkeit verleihen, wogegen das Vergleichsleimungsmittel III überhaupt nicht mit der Stärke zu einer Leimflotte formuliert werden konnte.

Beispiel 2

*Leimungsmittel IV*

Ein in Gegenwart von Friedel-Crafts-Katalysatoren aus einem Kohlenwasserstoff-$C_5$-Schnitt polymerisiertes Kohlenwasserstoffharz wurde durch Anlagern von Maleinsäureanhydrid derart modifiziert, daß es folgende Eigenschaften besaß:

| | |
|---|---|
| Säurezahl | : 62 mgKOH/g |
| Verseifungszahl | : 72 mgKOH/g |
| Erweichungspunkt | : 92°C (Ring und Kugel) |
| Gardner-Farbzahl | : 12 |

25,1 Gew.Tl. dieses Kohlenwasserstoffharzes wurden mit 3,3 Gew.Tl. des in Leimungsmittel II verwendeten Balsamharzes aufgeschmolzen, nach dem Erstarren zerkleinert und dieses Harzgemisch mit 4,3 Gew.Tl. 20 %iger Natronlauge und 67,3 Gew.Tl. Wasser dispergiert. Zu dieser Dispersion wurden 8,0 Gew.Tl. der in Leimungsmittel I verwendeten Maleinsäureanhydrid-Copolymerisat-Lösung gegeben und das so erhaltene Leimungsmittel mit Wasser auf einen Festkörpergehalt von 20% verdünnt.

*Leimungsmittel V* (Vergleich)

Als Vergleichsleimungsmittel gelangte die 25 %ige wässrige Lösung des Maleinsäureanhydrid-Copolymerisates allein zum Einsatz. Die Leimungsmittel IV und V wurden analog dem Beispiel 1 mit der Stärke kombiniert und auf der Laborleimpresse appliziert. Die erzielten Leimungswerte enthält Tabelle 2.

TABELLE 2

| Leimungsmittel | IV | V | ohne |
|---|---|---|---|
| Wasseraufnahme (DIN 53 132) sec | 60 | 30 | <1 |
| g/m² | 15 | 22 | 89 |
| Leimungsgrad (DIN 53 145) sec | 365 | 146 | 0 |
| Saughöhe (DIN 53 106) mm | 7 | 16 | 44 |
| Glätte (Beck) (DIN 53 107) sec | 2 | 11 | 19 |

Es ist der Vorteil des erfindungsgemäßen Leimungsmittels IV gegenüber dem Vergleichsleimungsmittel V deutlich erkennbar.

Beispiel 3

*Leimungsmittel VI*

Dieses Leimungsmittel wurde wie Leimungsmittel II hergestellt, mit dem Unterschied, daß anstelle des dort verwendeten Maleinsäureanhydrid-Copolymerisates ein solches der Formel

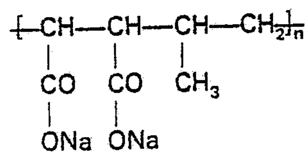

zum Einsatz gelangte.

*Leimungsmittel VII*

Dieses Leimungsmittel wurde wie Leimungsmittel II hergestellt, mit dem Unterschied, daß als Maleinsäureanhydrid-Copolymerisat eines der Formel

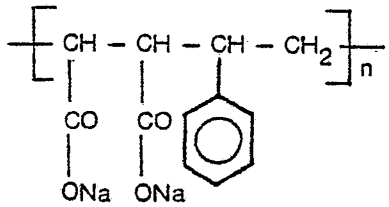

eingesetzt wurde.

*Leimungsmittel VIII* (Vergleich)

Dieses Leimungsmittel wurde analog II, jedoch ohne die Zugabe einer Maleinsäureanhydrid-Copolymerisat-Lösung hergestellt.

Die Leimungsmittel VI—VIII wurden analog dem Beispiel 1 mit der Stärke kombiniert und auf der Laborleimpresse appliziert. Die erzielten Leimungswerte enthält Tabelle 3.

TABELLE 3

| Leimungsmittel | VI | VII | VIII | ohne |
|---|---|---|---|---|
| Wasseraufnahme (DIN 53 132) sec | 120 | 120 | 60 | <1 |
| $g/m^2$ | 21 | 19 | 20 | 89 |
| Leimungsgrad (DIN 53 145) sec | 316 | 289 | 105 | 0 |
| Saughöhe (DIN 53 106) mm | 6 | 7 | 8 | 44 |
| Glätte (Beck) (DIN 53 107) sec | 1 | 1 | * | 19 |

*Papier ist nicht klebfrei

Es ist ersichtlich, daß die im Sinne der Erfindung hergestellten Leimungsmittel VI und VII dem Papier sehr gute Wasserfestigkeit verleihen, wogegen das Vergleichsleimungsmittel VIII eine weniger gute Wasserresistenz bewirkt und außerdem auf dem Papier Oberflächenmängel verursacht.

**Patentansprüche**

1. Papierleimungsmittel auf Basis von:

A. säuregruppenhaltigen aliphatischen Kohlenwasserstoff-harzen aus polymerisierten $C_4$-Schnitten und/oder $C_5$-Schnitten und gegebenenfalls $C_4$-Raffinaten, die mit ungesättigten Polycarbonsäureeinheiten modifiziert sind, mit Säurezahlen von 10—130, vorzugsweise 30—60, die gegebenenfalls noch andere synthetische oder natürlich harze enthalten können und

B. Umsetzungsprodukten von Copolymerisaten aus einerseits $\alpha,\beta$-ungesättigten Polycarbonsäureeinheiten und andererseits $\alpha$-Olefinen mit bis zu 5 C-Atomen oder Vinylmonomeren mit basischen Komponenten wobei A als wässrige Dispersion ihrer Alkalisalze mit einem Festkörpergehalt von 10—70 Gew.-% vorliegt, die modifizierten Kohlenwasserstoffharze darin einen Feststoffanteil von 10—60 Gew.-%., vorzugsweise 30—45 Gew.% bilden und gegebenenfalls synthetische oder natürliche Harze bis zu 15 Gew.%, vorzugsweise 3—5 Gew.% anwesend sind — und B eine wässrige Lösung mit einem Festkörpergehalt von 5—50 Gew.%, vorzugsweise 15—30 Gew.% darstellt — und das Verhältnis von A : B 99 : 1 bis 1 : 99, bevorzugt 97 : 3 bis 70 : 30, bezogen auf den Festkörpergehalt beträgt.

2. Papierleimungsmittel nach Anspruch 1, dadurch gekennzeichnet, daß die ungesättigten Polycarbonsäureeinheiten der Komponente A Maleinsäureanhydrideinheiten sind.

3. Papierleimungsmittel nach Anspruch 1 oder 2, dadurch gekennzeichnet, daß die Komponente B ein Halbamid eines Styrol-Maleinsäure-Copolymerisats ist.

**Revendications**

1. Colle à papier caractérisée en ce qu'elle est à base: — A — de résines d'hydrocarbures aliphatique contenant un groupe acide, formées de fractions en $C_4$ et/ou en $C_5$ polymérisées, et éventuellement de produits raffinés en $C_4$, qui sont modifiées au moyen d'unités d'acide polycarboxylique insaturé, avec un indice d'acide de 10—130, de préférence de 30—60, qui éventuellement peuvent encore contenir d'autres résines synthétiques ou naturelles, et — B — de produits de réactions de copolymères constitués, d'une part, d'unités d'acide polycarboxylique $\alpha,\beta$-insaturé et d'autre part d'oléfines $\alpha$ avec jusqu'à 5 atomes de C ou de monomères vinyliques avec des composants basiques, A se trouvant sous la forme d'une dispersion aqueuse de son sel alcalin, avec une teneur en matière solide de 10—70% en poids, les résines d'hydrocarbure modifiées formant ici une proportion de matières solides de 10—60% en poids, de préférence 30—45% en poids, et des résines naturelles ou synthétiques étant éventuellement présentes, à concurrence de 15% en poids, de préférence 3—5% en poids, et B étant sous forme d'une solution aqueuse avec une teneur en matière solide de 5—50% en poids, de préférence 15—30% en poids, — et le rapport A : B étant de 99 : 1 à 1 : 99, de préférence de 97 : 3 à 70 : 30, rapporté à la teneur en matière solide.

2. Colle à papier selon la revendication 1, caractérisée en ce que les unités d'acide polycarboxylique insaturé du composant A, sont des unités d'anhydride maléïque.

3. Colle à papier selon la revendication 1 ou 2, caractérisée en ce que le composant B est un semi-amide d'un copolymère styrène-acide maléïque.

## Claims

1. Paper sizing agents on the basis of:

A. Acid-group containing aliphatic hydrocarbon resins from polymerized $C_4$- and/or $C_5$- cuts and, possibly $C_4$-raffinates that are modified with unsaturated polycarboxylic acid units, with acid numbers of between 10 and 130, preferably 30 to 60, and that, possibly, may also contain other synthetic or natural resins and

B. Reaction products of copolymers from, on the one hand, $\alpha,\beta$-unsaturated polycarboxylic acid units, and, on the other hand, $\alpha$-olefins with up to 5 C-atoms of vinyl monomers, with basic components — whereby A is present as aqueous dispersion of their alkali salts with a solid content of 10 to 70 wt-%, the modified hydrocarbon resins form a solids content of 10 to 60 wt-% in this, preferably 30 to 45 wt-%, and, possibly, synthetic or natural resins are present up to 15 wt-%, preferably 3 to 5 wt-% — and B represents an aqueous solution with a solids content of 5 to 50 wt-%, preferably 15 to 30 wt-% — the ratio of A to B is 99:1 to 1:99, preferably 97:3 to 70:30, with respect to the solids content.

2. Paper sizing agents according to Claim 1, wherein the unsaturated polycarboxylic acid units of component A are maleic acid anhydride units.

3. Paper sizing agents according to Claim 1 or 2, wherein component B is a semiamide of a styrene-maleic-copolymerisate.